# EUROPEAN PATENT APPLICATION

(11) **EP 4 400 371 A1**
(43) Date of publication of application: **17.07.2024**
(21) Application number: 23151796.2
(22) Date of filing: 16.01.2023
(51) Int. Cl.: B60R 19/34

(54) **CRASH MANAGEMENT SYSTEM**

(71) Applicant: Constellium Singen GmbH, 78224 Singen (DE)
(72) Inventor: KOEKSAL, Emre, 78224 SINGEN (DE); SCHWARZ, Kai, 78244 GOTTMADINGEN (DE); ELSAESSER, Robert, 78234 ENGEN (DE)
(74) Representative: Constellium - Propriété Industrielle

(57) **Abstract**

The invention relates to a crash management system (100) for a vehicle front of a motor vehicle, the vehicle front having a longitudinal direction (X), a transverse direction (Y), which is perpendicular to the longitudinal direction, and a vertical direction (Z), which is perpendicular to a plane extending through the longitudinal direction (X) and the transverse direction (Y), the crash management system (100) comprising: a crossbeam (10), which extends essentially along the transverse direction (Y), the crossbeam (10) being configured to be attached to a vehicle structure by means of two crash boxes (20), which are disposed at a distance from each other; and two extension elements (30; 30a), which are attached to the crossbeam (10) at the end portions (26) of the crossbeam (10), each extension element (30; 30a) being formed by an extruded profile section having at least one chamber (32), the profile section having an extrusion direction running in the vertical direction (Z).

## Description

### FIELD OF THE INVENTION

The invention relates to a crash management system for a vehicle front of a motor vehicle that is characterized by particularly good collision properties while being relatively simple to produce.

### BACKGROUND

A crash management system for a vehicle front of a motor vehicle having the features of the preamble of claim 1 is known from EP 3 858 683 A1. The known crash management system is essentially characterized by two extension elements disposed at the respective end portions of a crossbeam, the extension elements each being a portion of an extruded profile, the extrusion direction running perpendicular to the length of the crossbeam. Such a crash management system is characterized in that it can be adapted to a given shape of the vehicle front in a relatively simple manner with respect to its extension elements. Furthermore, the known crash management system is able to exhibit other crash properties in the area of the extension elements than in the area of the crossbeam. This enables a particularly good management of specific crash situations, for example, which are tested during vehicle development.

Moreover, a support element disposed on a rear flange at the rear of the crossbeam, which faces a crash box, and connected to the crossbeam is known from DE 10 2014 216 478 A1. When the vehicle having such a crash management system experiences a lateral collision, the support element can be laterally supported by the crash box to thus prevent damage to the crash box or buckling of the crash box, for example.

Finally, WO 2015/014455 A1 discloses a crash management system whose support element, which interacts with a crossbeam in the event of a collision, is disposed in the area of a longitudinal beam of the motor vehicle.

### DESCRIPTION OF THE INVENTION

The crash management system according to the invention for a vehicle front of a motor vehicle with the features of claim 1 has the advantage that it is particularly simple to produce in combination with curved crossbeams and extension elements having a relatively great structural length with a large curvature beyond the area of the crash boxes and that it further has specific crash properties which enable a targeted introduction of forces into the crash box. In particular, such a crash management system is relatively simple to produce since welds can be placed between the crossbeam and the crash box even though the area of the crash management system is heavily curved laterally outside of the crash boxes, which makes welding on the outer sides of the crash boxes more difficult.

The invention is based on the idea of designing the extension elements with such a geometry that forces are introduced into the area of the crash box in a targeted manner in the event of a collision with a lateral overlap in which the extension elements are deformed in the direction of the respective crash boxes. This introduction of forces can be used either to support the extension element, i.e., for forming a relatively stiff extension element, or to enable a targeted deformation or an intentional buckling of the crash box in order to thus achieve specific deformation properties.

Against the background of the explanations above, a crash management system according to the invention is a crash management system for a vehicle front of a motor vehicle, the vehicle front having a longitudinal direction X, a transverse direction Y, which is perpendicular to the longitudinal direction, and a vertical direction Z, which is perpendicular to a plane extending through the longitudinal direction X and the transverse direction Y, the crash management system comprising: a crossbeam, which extends essentially along the transverse direction Y, the crossbeam being configured to be attached to a vehicle structure by means of two crash boxes, which are disposed at a distance from each other; and two extension elements, which are attached to the crossbeam at the end portions of the crossbeam located opposite each other in the transverse direction, each extension element being formed by an extruded profile section having at least one chamber, the profile section having an extrusion direction running in the vertical direction Z and wherein a stop element is disposed on the side of the extension element facing the crash box, the stop element being configured to interact with the crash box in a force-fitting manner when the extension element is deformed.

Advantageous embodiments of the crash management system according to the invention for a vehicle front of a motor vehicle are indicated in the dependent claims.

Such a stop element can be produced in a particularly simple and cost-efficient manner if it is a stop rib formed monolithically with the extension element. In other words, this means that the production of the stop element does not require a separate production step; instead, the stop element is produced (simultaneously) in the form of a stop rib during the extrusion of the extension element.

With regard to the intended mechanical properties of the stop element, it is preferred for the stop element to have a preferably triangular cross section, which tapers in the direction of the crash box.

It may also be advantageous for the extension element to protrude over the crossbeam in the vertical direction in order to pass specific crash tests or when the crossbeam is disposed relatively high or low above the road surface.

With regard to the position of the stop element, it is furthermore advantageous for the stop element to be adjacent directly or with little distance to a mounting portion of the extension element, the mounting portion serving to mount the extension element on the crossbeam.

Moreover, it is preferred for the extension element to have a cross section that comprises an outer wall and multiple chambers separated from each other by separating walls and for the stop element, which protrudes from the outer wall, to have a longitudinal axis which is at least approximately aligned with one separating wall. This allows in particular minimizing a deformation of the outer wall at the point of connection to the stop element when the extension element is deformed and effecting a particularly good and direct introduction of forces from an outer wall on the side opposite the stop element into the stop element.

It can also be advantageous for the separating wall that is at least approximately aligned with the stop element and forms the extension of the stop element to have a greater wall thickness than the other separating walls.

The stop element or the stop rib is preferably disposed in such a manner that the longitudinal axis is disposed at a slanted angle to two wall portions of the outer wall of the extension element that are adjacent to the stop element, the angle being less than 90°.

Since the extension element is an extruded part with an extrusion direction in the vertical direction, particularly simple shapes of the extension element can be formed in which at least part of its outer wall is curved. This enables a particularly simple adjustment of the shape of the extension element to the (outer) shape of a vehicle body.

Another improvement of the crash properties is achieved if the extension element has a plane support surface on the side facing away from the crossbeam, the support surface extending at least essentially in the transverse direction and being configured to be supported by a vehicle tire when the crash management system is deformed.

In a variation of such a geometry, the support surface protrudes over the crash box when viewed in the longitudinal direction.

There are different options of attaching the extension element. According to a first preferred embodiment, the extension element has a screw channel running in the vertical direction and configured to connect the extension element to the crossbeam by means of fixing screws or the like.

Alternatively, the extension element can have a mounting portion extending parallel to a front wall of the crossbeam and configured to connect the extension element to a front wall or a rear wall of the crossbeam by means of fixing screws or the like.

In a preferred variation of the last alternative, the extension element can have an outer wall portion disposed adjacent to the mounting portion and interacting with an end face of the crossbeam.

The material of the extension element preferably is made of an aluminum alloy; alternatively, it can be made of plastic or steel.

Other advantages, features and details of the invention are apparent from the following description of preferred embodiments of the invention and from the drawings.

### DESCRIPTION OF THE DRAWING:

- Fig. 1: is a simplified plan view of an end side of a crash management system for a vehicle front of a motor vehicle;
- Fig. 2: is a perspective illustration of an area of attachment between a crossbeam and an extension element of the crash management system according to Fig. 1; and
- Fig. 3: is a perspective illustration of an extension element, which is altered compared to Fig. 2, in the area of attachment to the crossbeam.

### DETAILED DESCRIPTION OF THE INVENTION

Identical elements and elements having the same function are designated by the same reference numerals in the figures.

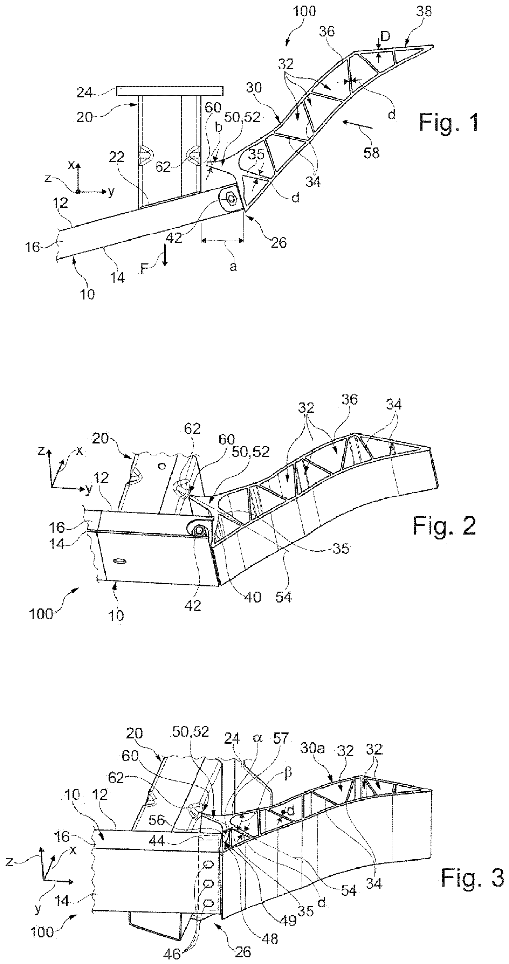

Fig. 1 shows the essential components of a crash management system 100 for a vehicle front of a motor vehicle. The vehicle front has a longitudinal direction X, a transverse direction Y, which is perpendicular to longitudinal direction X, and a vertical direction Z, which is perpendicular to the drawing plane of Fig. 1 and perpendicular to a plane extending through longitudinal direction X and transverse direction Y. Longitudinal direction X, transverse direction Y and vertical direction Z thus form the axes of a Cartesian coordinate system.

Crash management system 100 has a crossbeam 10, which extends essentially in transverse direction Y. Crossbeam 10 is preferably made of aluminum or an aluminum alloy and produced as an extruded part. Furthermore, crossbeam 10 preferably has a closed cross section having a rear wall 12, which faces the vehicle front, a front wall 14, and two transverse walls 16, which connect rear wall 12 to front wall 14, only the one upper transverse wall 16 being visible in the illustration of Fig. 1. The cross section of crossbeam 10, which has at least one chamber, is at least essentially rectangular.

Such a crossbeam 10 as described above is known from the state of the art.

Moreover, crossbeam 10 is connected to two crash boxes 20, which are spaced apart from each other in transverse direction Y, in the area of its rear wall 12, only the one crash box 20 disposed on the left when viewed in driving direction F of the vehicle being visible in the figures. The other crash box 20, which is disposed on the right side of crossbeam 10 when viewed in driving direction F, is identical to the left crash box 20.

Crash box 20 is connected to crossbeam 10, in particular to rear wall 12, with which respective crash box 20 is in contact in longitudinal direction X, by means of weld seams 22. Moreover, each crash box 20 is connected to a mounting plate 24 on the side facing away from crossbeam 10, mounting plate 24 being configured to mount crash box 20 on a vehicle structure, in particular on longitudinal beams of the vehicle, in a replaceable manner. Fixing screws (not shown) are used to do so, as is known from the state of the art.

As can further be seen from Fig. 1, crossbeam 10 is at least partially curved when viewed in transverse direction Y and laterally protrudes over crash box 20 by a distance a in the area of attachment to crossbeam 10. An extension element 30 is attached to each of the two opposing end portions 26 of crossbeam 10.

Extension element 30 is preferably made of an aluminum alloy and is an extruded part. Alternatively, however, extension element 30 can also be made of plastic or steel.

Extension element 30 has an extrusion direction running in vertical direction Z, i.e., perpendicular to the drawing plane of Fig. 1. Furthermore, the cross section of extension element 30 has a plurality of chambers 32, which are separated from each other by separating walls 34 and 35. The number of chambers 32 and their cross section or shape and the positioning of separating walls 34 and 35 depends on the given application.

Furthermore, the cross section of extension element 30 has an outer wall 36, which is at least partially curved. Wall thickness D of outer wall 36 is typically greater than wall thickness d of separating walls 34 and 35. On the side facing away from crossbeam 10, outer wall 36 of extension element 30 has a preferably plane support surface 38, which is at least approximately parallel to mounting plate 24, support surface 38 being configured to interact with a vehicle tire (not shown), i.e., to support itself thereon, in the event of a collision. In particular, support surface 38 protrudes over mounting plate 24 on the side facing away from crossbeam 10 when viewed in longitudinal direction X.

Figs. 1 and 2 show a simplified illustration of how extension element 30 can be connected to crossbeam 10. To this end, extension element 30 has a screw channel 40 on the side facing crossbeam 10, screw channel 40 being formed monolithically on extension element 30 and its height being such, for example, that it dips between transverse walls 16 of the cross section of crossbeam 10 and is disposed at little distance from or in physical contact with transverse walls 16. Extension element 30 can be fixed to crossbeam 10 by means of a fixing screw 42 or a similar element through a fixing opening (not shown) on crossbeam 16, the fixing opening being aligned with screw channel 40.

Fig. 3 shows an alternative way of attaching extension element 30a to crossbeam 10. To this end, extension element 30a has a mounting portion 44, which projects from outer wall 36 and which is formed monolithically with extension element 30a. For example, mounting portion 44 is fixed to rear wall 12 of crossbeam 10 by means of fixing screws 46, which pass through the cross section of crossbeam 10. An outer wall portion 48 of extension element 30a, which projects in the direction of front wall 14 in a direction perpendicular to mounting portion 44, is preferably in full contact with end face 49 of crossbeam 10.

Irrespective of how extension element 30, 30a is connected to crossbeam 10, extension element 30, 30a can further protrude over the cross section of crossbeam 10 at the top and/or at the bottom, i.e. over its transverse walls 16, in vertical direction Z. Moreover, extension element 30, 30a has a stop element 50 in the proximity of its point of attachment to crossbeam 10.

Stop element 50, which extends in vertical direction Z, is formed monolithically with extension element 30, 30a in the manner of a stop rib 52. The cross section of stop rib 52 is approximately triangular, width b of stop rib 52 tapering in a direction away from outer wall 36. Moreover, stop element 50, i.e., stop rib 52, which projects in the direction of crash box 20, has a longitudinal axis 54, which is prolonged by separating wall 35 in the cross section of extension element 30, 30a or which is at least approximately aligned with separating wall 35. Furthermore, the illustration of Figs. 1 and 3 shows that wall thickness d of separating wall 35 can be greater than wall thickness d of the other separating walls 34. As can further be seen, longitudinal axis 54 is disposed at slanted angles α, β to wall portions 56 and 57 of outer wall 36 of extension element 30, 30a, which are adjacent to stop rib 52, the two angles α, β being less than 90°.

In the event of a collision with a lateral overlap, in which crash management system 100 collides with an obstacle in the area of an extension element 30, 30a and is deformed in the process, extension element 30, 30a is deformed in such a manner in the direction of arrow 58 that stop element 50 or stop rib 52, which is disposed at little distance from or in physical contact with crash box 20 prior to the collision, enters into an operative connection with the outer wall of crash box 20 at a point of impact 60. Depending on the application, crash box 20 can either be reinforced by a reinforcing element (not shown) or, as illustrated, have reduced strength because of an indentation 62, which extends in vertical direction Z, in the form of a corrugation or the like in the area of point of impact 60 with the result that crash box 20 is deformed specifically in the area of point of impact 60 when stop element 50 collides with crash box 20. At the same time or in the event of an even stronger deformation, support surface 38 of extension element 30 also enters into an operative connection with the vehicle tire.

The crash management system 100 described above can be altered or modified in various ways without departing from the spirit of the invention.

### List of references:

- 10: crossbeam
- 12: rear wall
- 14: front wall
- 16: transverse wall
- 20: crash box
- 22: weld seam
- 24: mounting plate
- 26: end portion
- 30, a: extension element
- 32: chamber
- 34: separating wall
- 35: separating wall
- 36: outer wall
- 38: support surface
- 40: screw channel
- 42: fixing screw
- 44: mounting portion
- 46: fixing screw
- 48: outer wall portion
- 49: end face
- 50: stop element
- 52: stop rib
- 54: longitudinal axis
- 56: wall portion
- 57: wall portion
- 58: arrow (impact direction)
- 60: point of impact
- 62: indentation
- 100: crash management system

- a: distance
- b: width
- D: wall thickness
- d: wall thickness

- F: driving direction
- X: longitudinal direction
- Y: transverse direction
- Z: vertical direction

- α: angle
- β: angle

## Claims

1. A crash management system (100) for a vehicle front of a motor vehicle, the vehicle front having a longitudinal direction (X), a transverse direction (Y), which is perpendicular to the longitudinal direction, and a vertical direction (Z), which is perpendicular to a plane extending through the longitudinal direction (X) and the transverse direction (Y), the crash management system (100) comprising: a crossbeam (10), which extends essentially along the transverse direction (Y), the crossbeam (10) being configured to be attached to a vehicle structure by means of two crash boxes (20), which are disposed at a distance from each other; and two extension elements (30; 30a), which are attached to the crossbeam (10) at the end portions (26) of the crossbeam (10) located opposite each other in the transverse direction (Y), each extension element (30; 30a) being formed by an extruded profile section having at least one chamber (32), the profile section having an extrusion direction running in the vertical direction (Z),
**characterized in that**
a stop element (50) is disposed on the side of the extension element (30; 30a) facing the crash box (20), the stop element (50) being configured to interact with the crash box (20) in a force-fitting manner when the extension element (30; 30a) is deformed.

2. The crash management system according to claim 1,
**characterized in that**
the stop element (50) is a stop rib (52) formed monolithically with the extension element (30; 30a).

3. The crash management system according to claim 1 or 2,
**characterized in that**
the stop element (50) has a preferably triangular cross section, which tapers in the direction of the crash box (20).

4. The crash management system according to any one of claims 1 to 3,
**characterized in that**
the extension element (30; 30a) protrudes over the crossbeam (10) in the vertical direction (Z).

5. The crash management system according to any one of claims 1 to 4,
**characterized in that**
the stop element (50) is adjacent directly or with little distance to an area of the extension element (30; 30a) serving to attach the extension element (30; 30a) to the crossbeam (10).

6. The crash management system according to any one of claims 1 to 5,
**characterized in that**
the cross section of the extension element (30; 30a) has an outer wall (36) and multiple chambers (32), which are separated from each other by separating walls (34, 35), and the stop element (50), which protrudes from the outer wall (36), has a longitudinal axis (54), which is at least approximately aligned with one separating wall (35).

7. The crash management system according to claim 6,
**characterized in that**
the separating wall (35) that is at least approximately aligned with the stop element (50) has a greater wall thickness (d) than the other separating walls (34).

8. The crash management system according to claim 6 or 7,
**characterized in that**
the longitudinal axis (54) is disposed at a slanted angle (α, β) to two wall portions (56, 57) of the outer wall (36) of the extension element (30; 30a) that are adjacent to the stop element (50), the angles (α, β) being less than 90°.

9. The crash management system according to any one of claims 6 to 8,
**characterized in that**
at least part of the outer wall (36) of the extension element (30; 30a) is curved.

10. The crash management system according to any one of claims 1 to 9,
**characterized in that**
the extension element (30; 30a) has a plane support surface (38) on the side facing away from the crossbeam (10), the support surface (38) extending at least essentially in the transverse direction (Y) and being configured to be supported by a vehicle tire when the extension element (30; 30a) is deformed.

11. The crash management system according to claim 10,
**characterized in that**
the support surface (38) protrudes over the crash box (20) when viewed in the longitudinal direction (X).

12. The crash management system according to any one of claims 1 to 11,
**characterized in that**
the extension element (30) has a screw channel (40), which extends in the vertical direction (Z), the screw channel (40) being configured to connect the extension element (30) to the crossbeam (10) by means of a fixing screw (43) or the like.

13. The crash management system according to any one of claims 1 to 11,
**characterized in that**
the extension element (30a) has a mounting portion (44), which extends parallel to a rear wall (12) of the crossbeam (10), the mounting portion (44) being configured to connect the extension element (30a) to the rear wall (12) by means of fixing screws (46) or the like.

14. The crash management system according to claim 13,
**characterized in that**
the extension element (30a) has an outer wall portion (48) which is adjacent to the mounting portion (44) and which interacts with an end face (49) of the crossbeam (10).

15. The crash management system according to any one of claims 1 to 14,
**characterized in that**
the extension element (30; 30a) is made of an aluminum alloy or alternatively of plastic or steel.
